# NEUE EUROPÄISCHE PATENTSCHRIFT

(11) **EP 0 875 327 B2**
(45) Veröffentlichungstag und Bekanntmachung des Hinweises auf die Entscheidung über den Einspruch: **23.09.2020**
(45) Hinweis auf die Patenterteilung: 29.06.2005
(21) Anmeldenummer: 98105579.1
(22) Anmeldetag: 27.03.1998
(51) Int. Cl.: B23G 5/04, B23G 5/10

(54) **Schneidkopf**
Die
Filière

(30) Priorität: 25.04.1997 DE 29707468 U
(43) Veröffentlichungstag der Anmeldung: 04.11.1998
(73) Patentinhaber: REMS-WERK Christian Föll und Söhne GmbH & Co, 71332 Waiblingen (DE)
(72) Erfinder:
(74) Vertreter: Kohl, Karl-Heinz

(56) Entgegenhaltungen:
- EP-A- 0 249 184
- CH-A- 87 411
- DE-A1- 8 814 364

## Beschreibung

Die Erfindung betrifft einen Schneidkopf nach dem Oberbegriff des Anspruches 1 (siehe z.B. EP-A-0 249 184).

Mit solchen Schneidköpfen werden beispielsweise auf Rohrenden von in einer Wand verlegten Rohren Gewinde geschnitten. üblicherweise wird der Schneidkopf so auf das aus der Wand ragende Rohrende gesteckt, daß ein Ratschenhebel, in den der Schneidkopf eingesetzt wird, benachbart zur Wand liegt. Beim Schneiden des Gewindes wird der Schneidkopf auf dem überstehenden Rohrende abgestützt. Häufig ist jedoch das über die Wand überstehende Rohrende nur kurz, so daß der Schneidkopf um 180° gedreht von der anderen Seite her auf das Rohr aufgesetzt und die Schneidbacken im Schneidkopf entsprechend umgesetzt werden müssen. Das Deckelteil liegt dann benachbart zur Wand, während der Ratschenhebel auf der von der Wand abgewandten Seite des Schneidkopfes liegt. In dieser verdrehten Lage ist aber eine Führung und/oder Zentrierung auf dem Rohrende nicht möglich, so daß ein Gewinde nicht oder nur mit großem Aufwand geschnitten werden kann. In diesem Fall ragt nur ein kurzes Rohrstück in den Schneidkopf, so daß dieser auf dem Rohrende nicht einwandfrei abgestützt und damit das Gewinde nicht zentrisch geschnitten werden kann.

Der Erfindung liegt die Aufgabe zugrunde, einen Schneidkopf dieser Art so auszubilden, daß er auch dann einwandfrei auf dem zu bearbeitenden Rohrende abgestützt wird, wenn es nur wenig übersteht und daher der Schneidkopf in umgekehrter Lage auf das Rohrende aufgesetzt werden muß.

Diese Aufgabe wird bei einem Schneidkopf der gattungsbildenden Art erfindungsgemäß mit den Merkmalen des Anspruches 1 gelöst.

Infolge der erfindungsgemäßen Ausbildung weist der Schneidkopf am deckelseitigen Ende das Führungselement auf. Dadurch wird auch dann, wenn der Schneidkopf gegenüber seiner üblichen Lage um 180° verdreht an das Rohrende angesetzt wird, eine genaue Führung und Zentrierung gewährleistet, so daß sich ein sauberes Gewinde ohne Mühe schneiden läßt.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben. Es zeigt:
- Fig. 1: einen erfindungsgemäßen Schneidkopf mit einem Ratschenhebel in perspektivischer Darstellung,
- Fig. 2: den Schneidkopf nach Fig. 1 teilweise im Axialschnitt und teilweise in Ansicht ohne den Ratschenhebel,
- Fig. 3: in schematischer Darstellung den Schneidkopf gemäß den Fig. 1 und 2, der an einem über eine Wand vorstehenden Rohrende zum Schneiden eines Gewindes angesetzt ist, wobei der Ratschenhebel benachbart zur Wand liegt,
- Fig. 4: den Schneidkopf in einer Darstellung entsprechend Fig. 3, jedoch in einer um 180° verdrehten Lage.

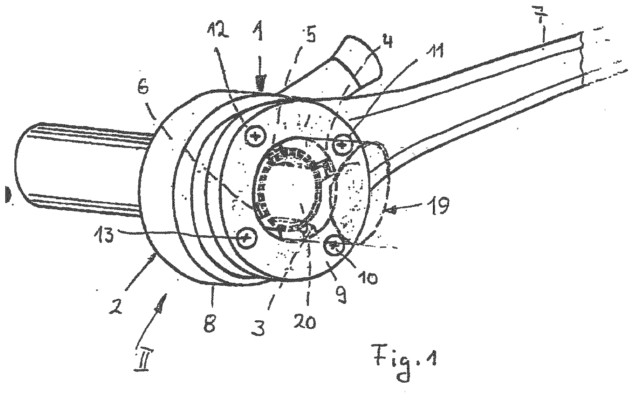

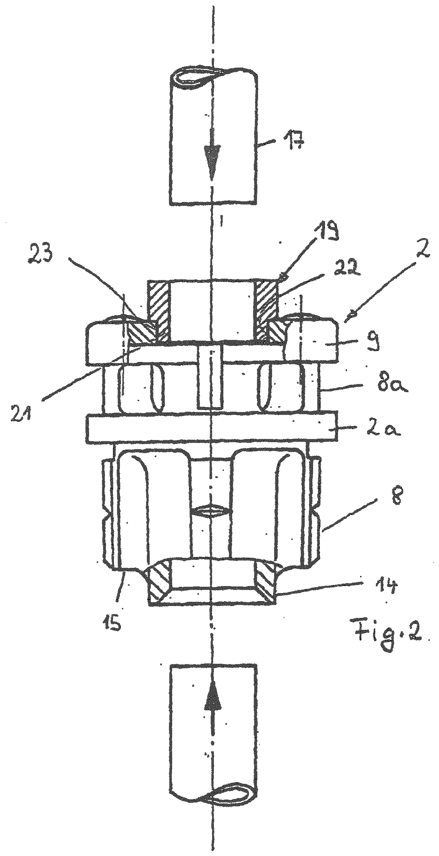

Der in den Fig. 1 und 2 dargestellte Schneidkopf 1 hat einen Schneidbackenhalter 2, in dem in bekannter Weise vorzugsweise vier jeweils diametral zueinander angeordnete Schneidbacken 3 bis 6 (Fig. 1) vorgesehen sind. Der Schneidkopf 1 dient zum Schneiden von Gewinden auf Rohren, insbesondere Rohrenden, und wird in eine Aufnahme eines Ratschenhebels 7 eingesetzt, mit dem der Schneidkopf 1 in bekannter Weise drehbar abgetrieben wird. Der Ratschenhebel 7 sitzt auf einer Schneidkopfhälfte 8, über deren Stirnseite 15 das eine Ende einer rohrförmigen Führung 14 für das Rohr axial ragt.

Etwa in halber Länge weist der Schneidkopf 1 einen Ringbund 2a auf. Auf der Stirnfläche der anderen Schneidkopfhälfte 8a sitzt ein Abschlußring oder Deckelteil 9, das im Ausführungsbeispiel von vier axial angeordneten Schrauben 10 bis 13 am Schneidbackenhalter befestigt ist.

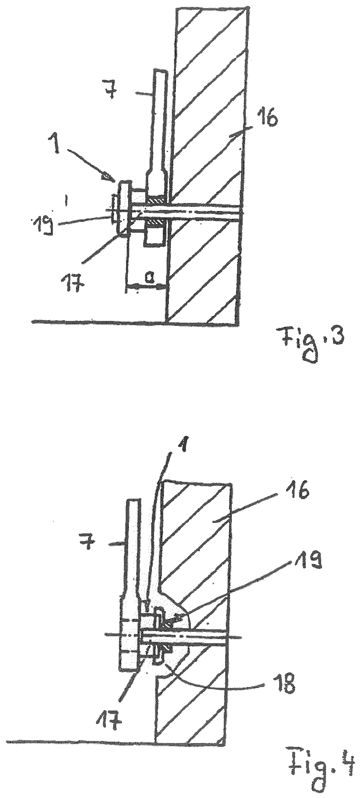

Wie Fig. 3 zeigt, wird der Schneidkopf 1 in üblicher Weise so auf ein aus der Wand 16 ragendes Rohrende 17 geschoben, daß sein Ratschenhebel 7 benachbart zur Wand 16 liegt. Mit der axial über den Schneidkopf 1 ragenden Führung 14 läßt sich der Schneidkopf einfach auf dem Rohrende 17 zentrieren. Da die Führung 14, gegebenenfalls unterbrochen, bis zu den Schneidbacken 3 bis 6 reicht, läßt sich auf dem Rohrende 17 ohne Schwierigkeiten ein Gewinde sauber schneiden. Der Schneidkopf 1 läßt sich nur dann problemlos auf das Rohrende 17 schieben, wenn es um das Maß a aus der Wand 16 ragt. Dieses Maß a ist so groß, daß nach Beendigung des Gewindeschneidens der Ratschenhebel 7 noch Abstand von der Wand 16 hat.

Ist der Überstand des Rohrendes kleiner als das Maß a (Fig. 4), kann der Schneidkopf 1 nur in einer um 180° gedrehten Lage auf das Rohrende 17 gesteckt werden, in der sich der Ratschenhebel 7 auf der von der Wand 16 abgewandten Seite des Schneidkopfes 1 befindet und die Schneidbacken 3 bis 6 umgesetzt sind. Der Bereich 18 der Wand 16 um das Rohrende 17 wird herausgeschlagen, damit trotz des kleineren Überstandes auf dem Rohrende 17 ein Gewinde geschnitten werden kann. Bei herkömmlichen Schneidköpfen ist es nicht oder nur äußerst schwierig, in dieser verdrehten Lage ein sauberes Gewinde zu schneiden. Dies ist darauf zurückzuführen, daß die Schneidbacken 3 bis 6 nahe an der Stirnseite des Deckelteiles 9 liegen (Fig. 2). Dadurch ist eine Führung des Schneidkopfes 1, der mit dem Deckelteil 9 voran auf das Rohrende 17 gesteckt wird, nicht möglich.

Um eine sichere Führung des Schneidkopfes 1 in der verdrehten Lage auf dem Rohrende 17 zu gewährleisten, weist der Schneidkopf 1 ein Führungselement 19 auf. Es ist vorzugsweise als Buchse ausgebildet, die an einem Ende des Schneidkopfes 1 in eine Ringöffnung 22 des Deckelteiles 9 eingesetzt ist. In Fig. 1 ist das Führungselement 19 aus Gründen der Übersichtlichkeit nur schematisch dargestellt.

Vorzugsweise weist das Führungselement 19 ein im Außendurchmesser verjüngtes Ende 21 auf, mit dem es in die Ringöffnung 22 des Deckelteiles 9 eingesetzt ist. Vorzugsweise ist das Führungselement 19 im Deckelteil 9 mit Preßsitz gehalten. Im Bereich des verjüngten Endes 21 weist das Führungselement 19 eine umlaufende äußere Ringschulter 23 auf, die sich etwa über ein Drittel der Länge der Führungselementes 19 erstreckt. Es ragt axial über das Deckelteil 9 und dient zur Führung und Zentrierung des Rohrendes 17.

Das Führungselement 19 kann zur Gewichtsreduzierung beispielsweise mehrere in Umfangsrichtung mit Abstand hintereinander liegende Durchbrüche aufweisen.

Das Führungselement 19 kann auch mit dem Deckelteil 9 verschweißt, verlötet, verklebt oder dergleichen, aber auch einstückig mit ihm ausgebildet sein. Schließlich kann das Führungselement 19 mit dem Deckelteil auch lösbar, beispielsweise durch eine Verschraubung, eine Rast-, Klemm- oder Schnappverbindung oder dergleichen, verbunden sein.

Mit dem Führungselement 19 wird selbst auf nur wenig aus der Wand 16 ragenden oder sogar innerhalb der Wand 16 liegenden Rohrenden 17 eine sichere Führung und ein einwandfreier Halt des Schneidkopfes 1 in der verdrehten Lage erreicht. Somit kann auch das Gewinde einwandfrei geschnitten werden.

Da das Führungselement 19 ein einfaches und gewichtsmäßig leichtes Bauteil ist, werden durch das Führungselement die Herstellungskosten nicht nennenswert erhöht und die Handhabung des Schneidkopfes 1 nicht beeinträchtigt.

Wenn das zu bearbeitende Rohrende 17 kleineren oder größeren Rohrdurchmesser hat, wird ein entsprechender Schneidkopf mit einem entsprechend angepaßten Führungselement 19 in den Ratschenhebel 7 eingesetzt.

Das Führungselement 19 hat gleichen Innendurchmesser wie die Führung 14, so daß eine zuverlässige Führung und Zentrierung während des Gewindeschneidens gewährleistet ist. Das Führungselement 19 kann aus jedem geeigneten Werkstoff, insbesondere aus Kunststoff, bestehen.

## Patentansprüche

1. Schneidkopf (1) für Gewindeschneideinrichtungen, wie Gewindeschneidkluppen und dergleichen, mit Gewindeschneidbacken (3 bis 6), die in einem Schneidbackenhalter (2) angeordnet sind, der eine Aufnahmeöffnung aufweist, in die die zu bearbeitenden Rohrenden (17) von beiden Seiten einführbar sind, und bei dem an einer Seite ein Deckelteil (9) vorgesehen ist,
**dadurch gekennzeichnet, dass** über eine Stirnseite (15) einer Schneidkopfhälfte (8) das eine Ende einer rohrförmigen Führung (14) für das Rohr (17) axial ragt, dass auf der Stirnfläche der anderen Schneidkopfhälfte (8a) das Deckelteil (9) sitzt, und dass zur Abstützung des zu bearbeitenden Rohres (17) am deckelseitigen Ende wenigstens ein hülsenförmiges Führungselement (19) vorgesehen ist, das axial über das Deckelteil (9) vorsteht und gleichen Innendurchmesser wie die Führung (14) aufweist.

2. Schneidkopf nach Anspruch 1,
**dadurch gekennzeichnet, daß** das Führungselement (19) am Deckelteil (9) angeordnet ist.

3. Schneidkopf nach Anspruch 1 oder 2,
**dadurch gekennzeichnet, daß** das Führungselement (19) ein im Außendurchmesser verjüngtes Ende (21) aufweist, mit dem es in das Deckelteil (9) ragt.

4. Schneidkopf nach Anspruch 3,
**dadurch gekennzeichnet, daß** das verjüngte Ende (21) des Führungselementes (19) eine am Außenumfang des Führungselementes (19) vorgesehene Schulter (23) aufweist.

5. Schneidkopf nach Anspruch 3 oder 4,
**dadurch gekennzeichnet, daß** die Länge des verjüngten Endes (21) etwa gleich einem Drittel der Länge des Führungselementes (19) entspricht.

6. Schneidkopf nach einem der Ansprüche 1 bis 5,
**dadurch gekennzeichnet, daß** das Führungselement (19) mit Preßsitz im Schneidkopf (1) gehalten ist.

7. Schneidkopf nach einem der Ansprüche 1 bis 6,
**dadurch gekennzeichnet, daß** das Führungselement (19) mit dem Schneidkopf (1) unlösbar verbunden ist.

8. Schneidkopf nach einem der Ansprüche 1 bis 6,
**dadurch gekennzeichnet, daß** das Führungselement (19) einstückig mit dem Deckelteil (9) ausgebildet ist.

9. Schneidkopf nach einem der Ansprüche 1 bis 5,
**dadurch gekennzeichnet, daß** das Führungselement (19) lösbar, vorzugsweise über eine Schraub-, Rast-, Klemmverbindung oder dgl., mit dem Deckelteil (9) verbunden ist.

## Claims

1. Die (1) for screw cutting devices like die holder stocks and the like with chasers (3-6) which are arranged within a chaser holder (2), comprising a receiver opening into which the end of the tubes (17) to be machined can be inserted from both sides and at which a cover piece (9) is provided at one side,
**characterized in that** one end of a tubular guide (14) for the tube (17) projects axially beyond one end face (15) of a die half (8), that the cover piece (9) is seated on the end face of the other die half (8a), and that for the support of the tube (17) to be machined is provided at the part of the cover end at least one bush-shaped guiding element (19), which projects axially over the cover piece (9) and has the same inner diameter as the guide (14).

2. Die according to claim 1,
**characterized in that** the guide element (19) is positioned at the cover piece (9).

3. Die according to claim 1 or 2,
**characterized in that** the guide element (19) comprises an end (21), reduced in the outside diameter, with which it projects into the cover piece (9).

4. Die according to claim 3,
**characterized in that** the reduced end (21) of the guide element (19) comprises a shoulder (23) provided at the outside circumference of the guide element (19).

5. Die according to claim 3 or 4,
**characterized in that** the length of the reduced end (21) corresponds approximately equally to a third of the length of the guide element (19).

6. Die according to one of the claims 1 to 5,
**characterized in that** the guide element (19) is held by a press fit within the die (1).

7. Die according to one of the claims 1 to 6,
**characterized in that** the guide element (19) is inextricably connected with the die (1).

8. Die according to one of the claims 1 to 6,
**characterized in that** the guide element (19) and the cover piece (9) are constructed in one piece.

9. Die according to one of the claims 1 to 5,
**characterized in that** the guide element (19) is releaseably linked with the cover piece (9), preferably by a bolted, rested or clamped joint or the like.

## Revendications

1. Tête de coupe (1) pour dispositif à fileter, telle une filière et analogue, comprenant des mors à fileter (3-6) disposés dans un support de mors de coupe (2) qui présente une ouverture de réception dans laquelle peuvent être introduites, à partir des deux côtés, les extrémités de tube (17) à usiner, et sur un côté duquel est prévu une pièce de couvercle (9),
**caractérisée en ce qu'**une extrémité d'un guide tubulaire (14) pour le tube (17) dépasse axialement d'un face frontale (15) d'une moitié (8) de la tête de coupe, **en ce que** la pièce de couvercle (9) est placée sur la face frontal de l'autre moitié (8a) de la tête de coupe, **en ce que** pour supporter le tube (17) à usiner, il est prévu à l'éxtrémité côté couvercle, au moins un élément de guidage (19) en forme de douille, qui dépasse axialement de la pièce de couvercle (9) et a le même diamètre intérieur que le guide (14).

2. Tête de coupe selon la revendication 1,
**caractérisée en ce** l'élément de guidage (19) est disposé sur la piéce de couvercle (9).

3. Tête de coupe selon la revendication 1 ou 2,
**caracterisée en ce que** l'élément de guidage (19) présente une extrémité (21) rétrécie en diamètre extérieur, avec laquelle il s'engage dans la pièce de couvercle (9).

4. Tête de coupe selon la revendication 3,
**caractérisée en ce que** l'extrémité rétrécie (21) de l'élément de guidage (19) présente un épaulement (23) prévu à la périphérie extérieure de l'élément de guidage (19).

5. Tête de coupe selon la revendication 3 ou 4,
**caractérisée en ce que** la longueur de l'extrémité rétrécie (21) correspond environ à un tiers de la longueur de l'élément de guidage (19).

6. Tête de coupe selon l'une des revendications 1 à 5,
**caractérisée en ce que** l'élément de guidage (19) est maintenu dans la tête de coupe (1) par un ajustement serré.

7. Tête de coupe selon l'une des revendications 1 à 6,
**aractérisée en ce** que l'élément de guidage (19) est relié de manière inamovible à la tête de coupe (1).

8. Tête de coupe selon l'une des revendications 1 à 6,
**caractérisée en ce que** l'élément de guidage (19) est réalisé d'un seul tenant avec la pièce de couvercle (9).

9. Tête de coupe selon l'une des revendications 1 à 5,
**caractérisée en ce que** l'élément de guidage (19) est relié de maniere amovible à la pièce de couvercle (9), de préférence par l'intermédiaire d'une liaison à vis, à encliquetage, à pincement ou d'un type analogue.
